# EUROPEAN PATENT SPECIFICATION

(11) **EP 4 558 245 B1**
(45) Date of publication and mention of the grant of the patent: **25.11.2026**
(21) Application number: 23741632.6
(22) Date of filing: 11.07.2023
(51) Int. Cl.: B01D 46/00, B01D 46/10

(54) **FILTER ELEMENT, AMBIENT AIR FILTER DEVICE AND MOTOR VEHICLE**
FILTERELEMENT, UMGEBUNGSLUFTFILTERVORRICHTUNG UND KRAFTFAHRZEUG
ÉLÉMENT FILTRANT, DISPOSITIF DE FILTRATION D'AIR AMBIANT ET VÉHICULE AUTOMOBILE

(30) Priority: 21.07.2022 DE 102022118231; 14.03.2023 DE 102023106247
(43) Date of publication of application: 28.05.2025
(73) Proprietor: MANN+HUMMEL GmbH, 71636 Ludwigsburg (DE)
(72) Inventor: JUNGINGER, Bernd, 71636 Ludwigsburg (DE); THEBAULT, Eric, 71636 Ludwigsburg (DE); DOS SANTOS ASCENSAO, Macario Francisco, 71636 Ludwigsburg (DE)
(74) Representative: Mann + Hummel Intellectual Property
(86) International application number: PCT/EP2023/069093
(87) International publication number: WO 2024/017691

(56) References cited:
- DE-A1- 10 111 318
- DE-U1- 20 211 500
- FR-A1- 2 815 699

## Description

### TECHNICAL FIELD

The invention concerns an ambient air filter device for arrangement in a front region of a motor vehicle, in particular adjacent to at least one heat exchanger of the motor vehicle, as well as a use of a filter element in an ambient air filter device, and a motor vehicle, in particular street vehicle, in particular passenger car, bus, truck, or rail vehicle, in particular railcar, locomotive, with an ambient air filter device.

### BACKGROUND ART

Air filters which are integrated in the front region of motor vehicles are usually arranged in a separate filter frame as part of the air guiding system in front of the radiator.

WO 2019/110223 describes a motor vehicle which comprises in a front region an air inlet opening behind which an ambient air purification device is arranged. The ambient air purification device is configured to remove particles, in particular particulate matter (PM 2.5), and/or gases from the ambient air. The ambient air purification device is provided with a filter element comprising a filter medium folded to a filter bellows. The filter element comprises several fold stabilization means which support the filter bellows and are present at a lateral distance of not more than 150 mm relative to each other.

FR 2 815 699 A1 discloses a filtration device intended for use in a ventilation and/or heating and/or air conditioning unit, particularly for a motor vehicle, comprising a frame that at least partially surrounds a filter medium, the frame being made of plastic and equipped with a flexible blade. The flexible blade has, in its free state, a shape that it retains when performing its sealing function, with the filtration device in place within the unit.

DE 101 11 318 A1 discloses a filter device for use in a ventilation and/or heating and/or air conditioning system, particularly for motor vehicles, comprising a frame that at least partially surrounds a flexible and deformable filter medium. The frame consists of a flexible and deformable thermoplastic elastomer and is secured to the filter medium by molding. It comprises two thin side walls, the inner surfaces of which are provided with ridges that surround the longitudinal edges of the filter medium.

DE 202 11 500 U1 discloses a filter insert for insertion into a filter housing, comprising a filter mat having a plurality of first pleat ridges that span a first main filter surface, and a plurality of second pleat ridges, which span a second main filter surface spaced apart from the first main filter surface. The filter mat is bounded in its transverse direction by two opposing side edges extending in a sawtooth or wave-like pattern transverse to the pleat ridges, and in its longitudinal direction by two likewise opposing end edges extending substantially transverse to the side edges. Along each of the side edges, a side wall is arranged on the bellows, which runs substantially perpendicular to the pleat ridges, extends in its longitudinal direction from one end edge to the other, and acts as a stiffening element for the bellows. Each of the side walls has a web that runs centrally or off-center between the planes of the main filter surfaces, essentially in the longitudinal direction of the respective side wall, and protrudes from it in a direction away from the bellows such that the combination of side wall and web has an essentially T -shaped cross-section, wherein the crossbar of the T is formed by the side wall and the stem of the T is formed by the web.

### SUMMARY

It is an object of the invention to provide a compact and inexpensive ambient air filter device for arrangement in a front region of a motor vehicle, in particular adjacent to at least one heat exchanger of the motor vehicle.

It is a further object to provide a use of a filter element in a compact and inexpensive ambient air filter device.

It is a further object to provide a motor vehicle, in particular street vehicle, in particular passenger car, bus, truck, or rail vehicle, in particular railcar, locomotive, with a compact and inexpensive ambient air filter device.

The aforementioned object is solved according to an aspect of the invention by an ambient air filter device for arrangement in a front region of a motor vehicle, in particular adjacent to at least one heat exchanger of the motor vehicle, wherein the ambient air filter device comprises at least one installation frame provided with an air inlet and an air outlet and enclosing a filter element receiving space at least partially circumferentially, wherein, in the installation frame, a filter element is arranged which separates the air inlet from the air outlet, wherein the installation frame, at sides positioned opposite each other and facing respectively the filter element receiving space, comprises guide means which are configured for mounting and/or demounting of the filter element along an insertion direction or removal direction, and wherein the filter element comprises a filter medium body which is enclosed by an at least partially circumferential element frame, characterized in that the guide means of the installation frame comprise one or a plurality of longitudinal guides, and in that the filter element comprises counter guide means which engage in the longitudinal guides, wherein the counter guide means project away from the element frame and face away from the filter medium body and are configured with a predetermined extension in the insertion direction or removal direction, wherein at least one counter guide means is provided, respectively, at sides of the element frame which are facing away from each other and, for intended installation of the filter element, are arranged parallel to the insertion direction or removal direction.

The further object is solved by a use of a filter element in an ambient air filter device, wherein the filter element which separates the air inlet from the air outlet is arranged in the installation frame in that the filter element is inserted with the counter guide means into the longitudinal guides.

The further object is solved by a motor vehicle, in particular street vehicle, in particular passenger car, bus, truck, or rail vehicle, in particular railcar, locomotive, comprising in a front region at least one air inlet opening behind which an ambient air filter device is arranged which is configured in particular for removal of particles, in particular particulate matter, and/or gases from the ambient air.

Beneficial configurations and advantages of the invention result from the additional claims, the description, and the drawing.

According to an aspect of the invention, an ambient air filter device for arrangement in a front region of a motor vehicle, in particular adjacent to at least one heat exchanger of the motor vehicle, is proposed, wherein the ambient air filter device comprises at least one installation frame provided with an air inlet and an air outlet and enclosing at least partially circumferentially a filter element receiving space. In the installation frame, a filter element is arranged which separates the air inlet from the air outlet. At sides positioned opposite each other and facing respectively the filter element receiving space, the installation frame comprises guide means which are configured for mounting and/or demounting of the filter element along an insertion direction or removal direction. The filter element comprises a filter medium body which is enclosed by an at least partially circumferential element frame.

The invention is set out in the appended set of claims.

According to the invention, the guide means of the installation frame comprise one or a plurality of longitudinal guides and the filter element comprises counter guide means which engage in the longitudinal guides. In this context, the counter guide means project away from the element frame and face away from the filter medium body and are configured with a predetermined extension in the insertion direction or removal direction, wherein at least one counter guide means is respectively provided, at sides of the element frame which are facing away from each other and, for intended installation of the filter element, are arranged parallel to the insertion direction or removal direction.

In particular, the installation frame can be arranged fixed at the vehicle.

Longitudinal guides extend in the insertion direction of the filter element into the installation frame. An installation of the filter element can be realized preferably from the top in a vertical direction of the vehicle but an installation of the filter element from the bottom is also possible. The installation can be realized also at a certain angle in relation to the vertical direction of the vehicle.

In embodiments, the longitudinal guides can be configured as one or a plurality of guide grooves. In other embodiments, the longitudinal guides can be configured as one or a plurality of linear guides. In particular, in an embodiment with one or a plurality of linear guides, the linear guide can be configured between tines which are alternatingly arranged at one or two rims of an installation frame and are at least partially angled away from the surface of the installation frame.

In embodiments, the counter guide means are strips which are facing away from the filter medium body, respectively. The strips can be continuous along their length extension or can be interrupted by cutouts or cuts so that a strip can be comprised of a plurality of adjacently arranged strip sections.

The strips as counter guide means of the filter element facing away from the filter medium body can be realized as protruding lateral bands which serve for end face edge sealing of the filter medium body. These protruding lateral bands can have different cross sections, for example, an L shape, a T shape, a U shape, a twisted U shape, and the like. These protruding lateral bands can engage in longitudinal guides of the installation frame of the ambient air filter device so that the filter element is fixed in the installation frame. Due to the construction of the filter element by means of protruding lateral bands, the use of plastic material components in the form of filter frames can be dispensed with in this region.

Advantageously, the motor vehicle can thus be classified in a better no-claims bonus class and/or a larger crash zone or collapsible zone of the front region, for avoiding damages at the radiator and further critical components in the region of the front skirt of the motor vehicle, can be dispensed with.

For a safe installation of the filter element, corresponding longitudinal guides in which the protruding lateral band is inserted are integrated in the casing of the radiator. In order to secure the mounting position of the filter element, the filter element can be fixed via holes or cutouts in the protruding lateral band by means of a lock-and-key principle. Since the filter element is arranged with very minimal spacing in front of the radiator, only an abutting or contacting of the soft filter medium at the radiator occurs at high loads so that the plastic material frame for the filter element can be dispensed with.

In particular, the guide means of the installation frame can be configured as linear guide means so that the filter element can be pushed into and fixed in the installation frame in a simple manner.

The ambient air filter device can be arranged preferably in front of a heat exchanger of the radiator. When the filter element comprises a folded filter medium, the counter guide means can be arranged preferably parallel to the fold direction in order to ensure the flow through the complete filter element. The invention is however not limited at all to folded filter medium bodies but encompasses expressly also non-folded filter medium bodies, for example, in form of foam mats, stacked arrangements of filter media, and other flat material configurations.

The element frame can be formed preferably of an in particular synthetic nonwoven as a lateral band. The lateral band can be reinforced, if needed, with an adhesive. A plastic over-molding of the filter medium body as an element frame is possible also.

As filter medium, preferably a synthetic material can be employed. Depending on the available installation space, fold heights and fold spacings can be optimized, for example, with respect to a filtration performance and/or a service life.

The installation frame can be integrated advantageously into an air guiding system of the motor vehicle. Foamed polystyrene, for example, can be employed as material or a plastic material with a soft component. The longitudinal guides in the installation frame can be arranged advantageously such that an installation of the filter element is realized preferably from the top in a vertical direction of the vehicle, however, an installation of the filter element from the bottom is possible also. The installation can also be realized at a certain angle in relation to the vertical direction of the vehicle.

Due to the elimination of the otherwise conventional filter frame of plastic material, inclusive of the plastic material components employed up to now for fixation of the filter element in front of the radiator, an inexpensive integration of the filter element in an air guiding system in the front region of a motor vehicle is possible.

According to a beneficial embodiment of the ambient air filter device, the counter guide means can extend in their length extension along a length extension of the filter medium body. In particular, the counter guide means can extend in their length extension along a length extension of folds of the filter medium. In this manner, advantageously a flow of the ambient air through the complete filter element can be ensured which is particularly advantageous when the air inlet and/or air outlet extends only across a part of the height of the filter element because the complete height of the filter element can be utilized in this way. In other embodiments, the folds of the filter medium can extend however also at an angle, in particular at a right angle, in relation to the length extension of the counter guide means.

According to a beneficial embodiment of the ambient air filter device, the element frame can be configured of a nonwoven, wherein the counter guide means in particular are configured as one piece together with the element frame. Alternatively or additionally, the counter guide means can be connected, in particular glued, to the element frame. Expediently, a lateral band for end face edge sealing of folds of the filter medium body can be configured as an element frame. In this way, the strips of the counter guide means can be formed in a manufacturing-suitable manner from the protruding lateral band. Alternatively, the strips however can also be additionally glued onto the element frame or welded to the element frame.

According to a beneficial embodiment of the ambient air filter device, the filter medium body can be molded around with plastic material which forms the element frame, wherein the counter guide means can be configured in particular as one piece together with the element frame. Alternatively or additionally, the counter guide means can be connected, in particular glued, to the element frame. In such an embodiment, the counter guide means can be formed of plastic material whereby the counter guide means can exhibit an advantageous stiffness. In this way, the filter element can be fixed safely in the installation frame.

According to a beneficial embodiment of the ambient air filter device, the counter guide means can comprise at least regions which extend parallel to an areal extension of the filter medium body. In other words, the counter guide means project laterally in the plane of the filter medium body and extend in particular transversely to a flow-through direction in intended use. In this manner, the filter element can be supported advantageously against the flow pressure upon flow of ambient air therethrough.

According to a beneficial embodiment of the ambient air filter device, two in particular parallel strips, extending away from the element frame, can be arranged respectively at the sides of the element frame facing away from each other, wherein the strips, in particular in a flow-through direction of the filter element, can be arranged spaced apart from each other. In this context, two longitudinal guides corresponding thereto can be arranged at sides of the installation frame positioned opposite each other. In this way, the filter element can be supported advantageously against the flow pressure upon flow of ambient air therethrough. Also, a simple mounting of the filter element in the installation frame can be ensured.

According to a beneficial embodiment of the ambient air filter device, the respective at least one strip can comprise, at the sides of the element frame facing away from each other, at least two legs which are positioned at an angle, in particular a right angle, to each other. In this way, an advantageous fixation of the filter element in the installation frame not only in flow-through direction but also in lateral direction thereto can be ensured. In addition, the filter element can be advantageously supported against the flow pressure upon flow of ambient air therethrough.

According to a beneficial embodiment of the ambient air filter device, the at least two legs, in particular at least three legs, of the respective at least one strip can form together with the element frame in particular closed cross section along an extension of the counter guide means at the sides of the element frame facing away from each other. In particular, the at least two legs, in particular at least three legs, can form a rectangular, in particular square, cross section. In this way, an advantageous fixation of the filter element in the installation frame not only in flow-through direction but also in lateral direction thereto can be ensured. In addition, the filter element can be supported advantageously against the flow pressure upon flow of ambient air therethrough.

According to a beneficial embodiment of the ambient air filter device, at oppositely positioned sides of the element frame, at least one reinforcement strip protruding away from the element frame and facing the filter medium body can be arranged, respectively, which extends along an areal extension of the filter medium body at least in regions. In particular, in this context the respective at least one reinforcement strip can be connected, in particular glued, at least in regions to the filter medium body, in particular to fold tips of folds of the filter medium body. The reinforcement strip serves for reinforcing the filter element, in particular the filter medium body, and is glued in general to fold tips of the filter medium body. Advantageously, the reinforcement strip can be configured as one piece together with the lateral band as an element frame in that a part of the lateral band is folded onto the flow-through surface of the filter medium body, in particular onto the fold tips and glued to the fold tips.

According to a beneficial embodiment of the ambient air filter device, the air inlet as well as the air outlet can be connected in fluid communication to the environment in an arrangement of use. In particular, the air inlet can be designed to be flowed through by unfiltered ambient air in the arrangement of use and the air outlet can be designed to be flowed through by filtered ambient air in the arrangement of use. In this manner, an advantageous flow through the ambient air filter device and thus through the filter element installed therein is provided. In other words, the subject matter of the invention concerns an ambient air purification device in which the filtered ambient air is not supplied primarily to the target systems fixed at the vehicle but released back into the environment in order to purify the ambient air and to make the environment in which the vehicle provided with the ambient air filter device is present somewhat cleaner.

Advantageously, the filter medium can be configured of synthetics and can be arranged folded in the filter medium body, wherein the folds are oriented transversely to the flow-through direction. The filter medium can be sealed transversely to the flow-through direction at least in regions, in particular at end face edges of folds of the filter medium, by means of synthetic nonwoven or by means of plastic over-molding. Such a lateral band of synthetic nonwoven but also a plastic over-molding can form expediently the element frame of the filter element.

According to a beneficial embodiment of the ambient air filter device, the filter element receiving space can be closed by a cover in the insertion direction or removal direction. In this way, the filter element can be inserted through a mounting opening into the installation frame and, subsequently, the mounting opening can be fluid-tightly closed, beneficially by the cover, so that a directed fluid flow through the filter element can be generated, and the filter element and thus the fluid flow is protected against external soiling.

According to a beneficial embodiment, the installation frame can be configured by a flat grid which is permeable to flow and at which the filter element can be arranged. The grid can be in particular a wire mesh-type grid. In particular, the grid can be arranged on a side of the filter element which is facing away from the flow-through direction. This provides an improved stability of the filter element while at the same time providing a particularly flat construction. Advantageously, the filter element can be inserted with its counter guide means into two oppositely positioned rims of the grid. The rims of the grid can comprise tines angled away from a grid surface, wherein the filter element with its counter guide means, in particular strips, can be inserted between the grid surface and the projecting tines. The grid can be configured in a rectangular or trapezoidal shape. In particular, the surface of the grid can taper in the direction of the insertion direction. This enables a mix up-proof mounting of the filter element in the installation frame.

According to a further aspect of the invention, a use of a filter element in an ambient air filter device is proposed, wherein the filter element which separates the air inlet from the air outlet is arranged in the installation frame in that the filter element is inserted with the counter guide means into the longitudinal guides.

The strips as counter guide means of the filter element facing away from the filter medium body can be realized as protruding lateral bands which serve for end face edge sealing of the filter medium body. These protruding lateral bands can have different cross sections, for example, an L shape, a U shape, a twisted U shape, and the like. These protruding lateral bands can engage in longitudinal guides of the installation frame of the ambient air filter device so that the filter element is fixed in the installation frame. Due to the construction of the filter elements by means of protruding lateral bands, the use of plastic frame components in the form of filter frames can be dispensed with in this region.

Advantageously, the motor vehicle can thus be classified in a better no-claims bonus class and/or a larger crash zone or collapsible zone of the front region for avoiding damages at the radiator and further critical components in the region of the front skirt of the motor vehicle can be dispensed with.

For a safe installation of the filter element, corresponding longitudinal guides in which the protruding lateral band is inserted are integrated into the casing of the radiator. In order to secure the mounting position of the filter element, the filter element can be fixed via holes or cutouts in the protruding lateral band by means of a lock-and-key principle. Since the filter element is arranged with very minimal spacing in front of the radiator, only an abutting or contacting of the soft filter medium at the radiator occurs at high loads so that the plastic material frame for the filter element can be dispensed with.

In particular, the guide means of the installation frame can be configured as linear guide means so that the filter element can be pushed into and fixed in the installation frame in a simple manner.

When the filter element comprises a folded filter medium, the counter guide means can be arranged preferably parallel to the fold direction in order to ensure flow through the complete filter element.

The element frame can be formed preferably of an in particular synthetic nonwoven as a lateral band. The lateral band, if needed, can be reinforced with an adhesive. Also, a plastic over-molding of the filter medium body as an element frame is possible.

As filter medium, preferably a synthetic material can be used. Depending on the available installation space, fold heights and fold distances can be optimized, for example, with respect to a filtration performance and/or a service life.

Due to the elimination of the otherwise conventional filter frame of plastic material inclusive of the plastic material components employed up to now for fixation of the filter element in front of the radiator, an inexpensive integration of the filter element into an air guiding system in the front region of a motor vehicle is possible.

According to a beneficial embodiment, the element frame can be configured of a nonwoven, wherein the counter guide means in particular are configured as one piece together with the element frame or wherein the counter guide means are connected, in particular glued, to the element frame. Expediently, a lateral band for end face edge sealing of folds of the filter medium body can be configured as an element frame. The strips of the counter guide means can thus be formed in a manufacturing-suitable manner of the protruding lateral band. Alternatively, the strips however could also be glued additionally onto the element frame or welded to the element frame.

According to a beneficial embodiment, the filter medium body can be molded around with plastic material which forms the element frame, wherein the counter guide means in particular can be configured as one piece together with the element frame. Alternatively or additionally, the counter guide means can be connected, in particular glued, to the element frame. In such an embodiment, the counter guide means can be formed of plastic material, whereby the counter guide means can exhibit an advantageous stiffness. In this way, the filter element can be fixed securely in the installation frame.

According to a beneficial embodiment, the counter guide means can comprise at least regions which extend parallel to an areal extension of the filter medium body. In this manner, the filter element can be supported advantageously against the flow pressure upon flow of ambient air therethrough.

According to a beneficial embodiment, two in particular parallel strips protruding away from the element frame can be arranged respectively at the sides of the element frame facing away from each other, wherein the strips, in particular in a flow-through direction of the filter element, can be arranged spaced apart from each other. In this context, two longitudinal guides corresponding thereto can be arranged respectively at sides of the installation frame positioned opposite each other. In this manner, the filter element can be supported advantageously against the flow pressure upon flow of ambient air therethrough. Also, a simple mounting of the filter element in the installation frame can be ensured.

According to a beneficial embodiment, at least one of the respective two strips, at the sides of the element frame facing away from each other, can comprise at least two legs which define an angel, in particular right angle. In this way, an advantageous fixation of the filter element in the installation frame not only in flow-through direction but also in lateral direction thereto can be ensured. In addition, the filter element can be supported advantageously against the flow pressure upon flow of ambient air therethrough.

According to a beneficial embodiment, the at least two legs, in particular at least three legs, of the respective at least one strip at the sides of the element frame facing away from each other can form with the element frame an in particular closed cross section along an extension of the counter guide means. In particular, the at least two legs, in particular at least three legs, can form a rectangular, in particular square, cross section. In this way, an advantageous fixation of the filter element in the installation frame not only in flow-through direction but also in lateral direction thereto can be ensured. In addition, the filter element can be supported advantageously against the flow pressure upon flow of the ambient air therethrough.

According to a beneficial embodiment, at least one reinforcement strip projecting away from the element frame and facing the filter medium body can be respectively arranged at oppositely positioned sides of the element frame, which reinforcement strip extends, at least in regions, along an areal extension of the filter medium body. In particular, in this context the respective at least one reinforcement strip can be connected, in particular glued, at least in regions to the filter medium body, in particular to the fold tips of folds of the filter medium body. The reinforcement strip serves for reinforcing the filter element, in particular the filter medium body, and is in general glued to fold tips of the filter medium body. Advantageously, the reinforcement strip can be configured as one piece together with the lateral band as an element frame in that a part of the lateral band is folded onto the flow-through surface of the filter medium body, in particular onto the fold tips and glued to the fold tips.

According to a further aspect of the invention, a motor vehicle, in particular street vehicle, in particular passenger car, bus, truck, or a rail vehicle, in particular railcar, locomotive, is proposed which in a front region comprises at least one air inlet opening behind which an ambient air filter device is arranged, which is configured in particular for removal of particles, in particular particulate matter, and/or gases from the ambient air. The motor vehicle can comprise an electric motor drive and/or internal combustion engine drive, wherein electric drive of course also includes a fuel cell drive. The term "behind the at least one air inlet opening" is to be understood in relation to the ambient air purification device herein not strictly to "spatially behind" but can also mean generally a downstream arrangement with respect to flow.

A motor vehicle with such an ambient air filter device can be presumed to be a zero emission vehicle on a balance sheet. Alternatively, embodiments of the motor vehicle are possible in which selectively only the particulate matter emissions of brakes and/or internal combustion engines are compensated by the ambient air filter device.

According to a beneficial embodiment of the motor vehicle, the insertion direction or removal direction can be oriented in an intended vertical direction of the vehicle or at an acute angle to the intended vertical direction of the vehicle. The air inlet opening behind which the ambient air purification device is present can be in particular a cooling air inlet opening and, for example, can be covered by a radiator grill. The latter can be located, in particular in relation to the vertical axis of the vehicle, at a level of the front headlights or below or above. Generally, it is important that the cross section surface of the air inlet opening is as large as possible so that an air quantity as large as possible can be supplied. Advantageously, the installation frame can be integrated, for example, into an air guiding system of the motor vehicle. As material, for example, foamed polystyrene can be used, or a plastic material with a soft component. Longitudinal guides in the installation frame can be arranged advantageously such that an installation of the filter element is realized preferably in a vertical direction of the vehicle from the top but an installation of the filter element from the bottom is also possible. The installation can be realized also at a certain angle to the vertical direction of the vehicle.

According to a beneficial embodiment of the motor vehicle, the installation frame of the ambient air filter device can be configured as part of a cowl, casing, air guiding structure, and/or energy absorption structure present in the front region of the motor vehicle. The installation frame, for example, can be advantageously integrated into one of the components in the front region of the motor vehicle. As material, for example, foamed polystyrene can be used, or a plastic material with a soft component.

### BRIEF DESCRIPTION OF DRAWINGS

Further advantages result from the following drawing description. In the drawings, embodiments of the invention are illustrated. The drawings, the description, and the claims contain numerous features in combination. A person of skill in the art will expediently consider the features also individually and combine them to expedient further combinations. It is shown in an exemplary fashion in:
Fig. 1 a schematic view of a front region of a motor vehicle according to an embodiment of the invention with an ambient air filter device;
Fig. 2 a partially sectioned isometric illustration of an ambient air filter device according to an embodiment of the invention with marked regions Y and Z;
Fig. 3 the illustration of the detail Z according to Figure 2 with a section through guide means and counter guide means of the filter element;
Fig. 4 the illustration of the detail Y according to Figure 2 with a section through a cover;
Fig. 5 an isometric illustration of the ambient air filter device according to Figure 2 with partially pulled-out filter element;
Fig. 6 a partially sectioned isometric illustration of an ambient air filter device according to a further embodiment of the invention with marked regions Y and Z;
Fig. 7 the illustration of the detail Z according to Figure 6 with a section through guide means and counter guide means of the filter element;
Fig. 8 the illustration of the detail Y according to Figure 6 with a section through a cover;
Fig. 9 an isometric illustration of the ambient air filter device according to Figure 6 with partially pulled-out filter element;
Fig. 10 a partially sectioned isometric illustration of an ambient air filter device according to a further embodiment of the invention with marked regions Y and Z;
Fig. 11 the illustration of the detail Z according to Figure 10 with a section through the guide means and counter guide means of the filter element;
Fig. 12 the illustration of the detail Y according to Figure 10 with a section through a cover;
Fig. 13 an isometric illustration of the ambient air filter device according to Figure 10 with partially pulled-out filter element;
Fig. 14 a partially sectioned isometric illustration of an ambient air filter device according to a further embodiment of the invention with marked regions Y and Z;
Fig. 15 the illustration of the detail Z according to Figure 14 with a section through the guide means and counter guide means of the filter element;
Fig. 16 the illustration of the detail Y according to Figure 14 with a section through a cover;
Fig. 17 an isometric illustration of the ambient air filter device according to Figure 14 with partially pulled-out filter element;
Fig. 18 an isometric illustration of a further embodiment of an ambient air filter device according to the invention;
Fig. 19 an isometric illustration of an installation frame of an ambient air filter device in the form of a grid fixed at the vehicle with an inserted filter element;
Fig. 20 the filter element according to Figure 19 upon insertion into the installation frame configured as a grid; and
Fig. 21 the illustration of the detail B of the installation frame according to Figure 20 configured as a grid.

### DESCRIPTION OF EMBODIMENTS

In the Figures, same or same-type components are identified with same reference characters. The Figures show only examples and are not to be understood as limiting.

Directional terminology used in the following with terms such as "left", "right", "top", "bottom", "in front of", "behind", "thereafter", and the like serve only for better understanding of the Figures and is not to be understood in any case as a limitation of the generality. The illustrated components and elements, their design and use can vary in the context of considerations of a person of skill in the art and be adapted to the respective applications.

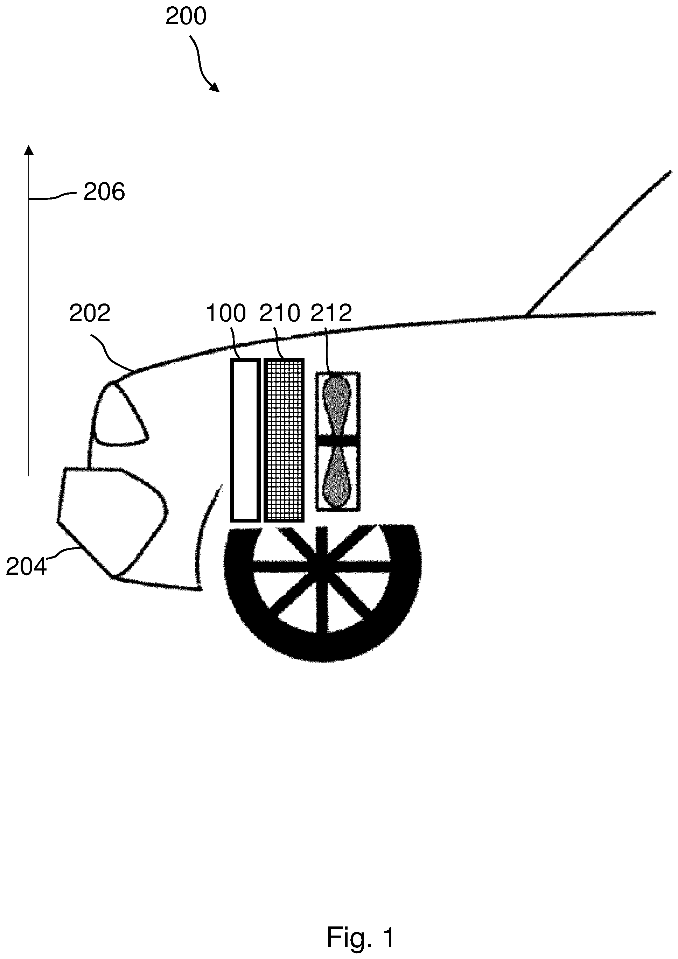

Figure 1 shows a schematic view of a front region 202 of a motor vehicle 200 according to an embodiment of the invention with an ambient air filter device 100.

The vehicle 200 can represent in particular a street vehicle, in particular a passenger car. The following embodiments apply however also to a bus, a truck, or a rail vehicle, in particular a railcar or a locomotive.

The motor vehicle 200 comprises in a front region 202 an air inlet opening 204 behind which an ambient air filter device 100 is arranged which in particular is configured for removal of particles, in particular particulate matter, and/or gases from the ambient air.

The ambient air filter device 100 is arranged in front of a heat exchanger 210 of the motor vehicle 200 which is followed by a blower 212, for example, a fan.

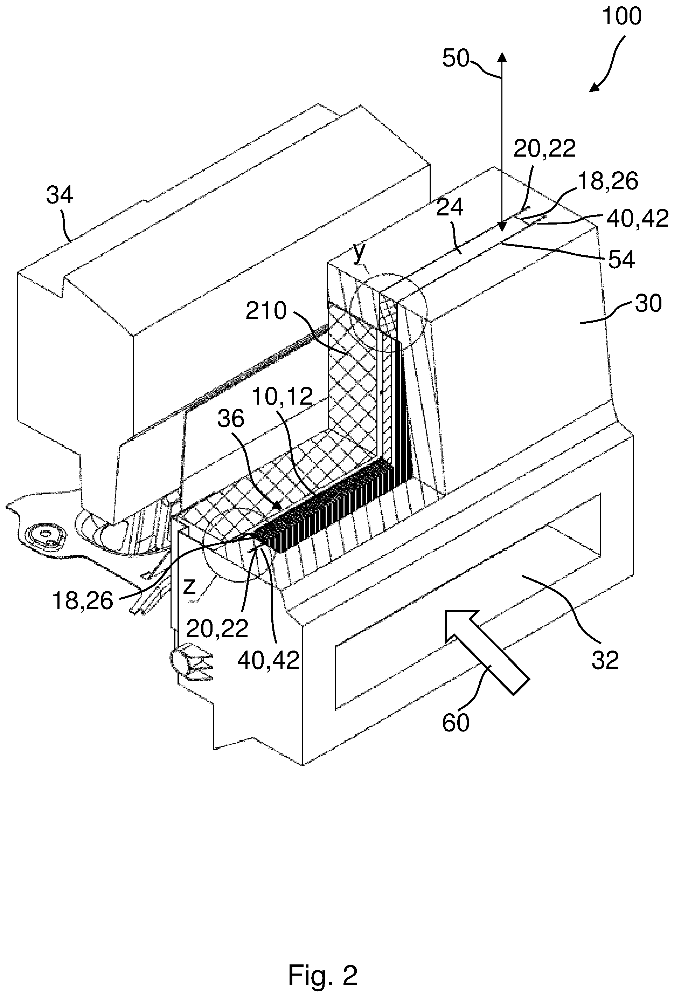

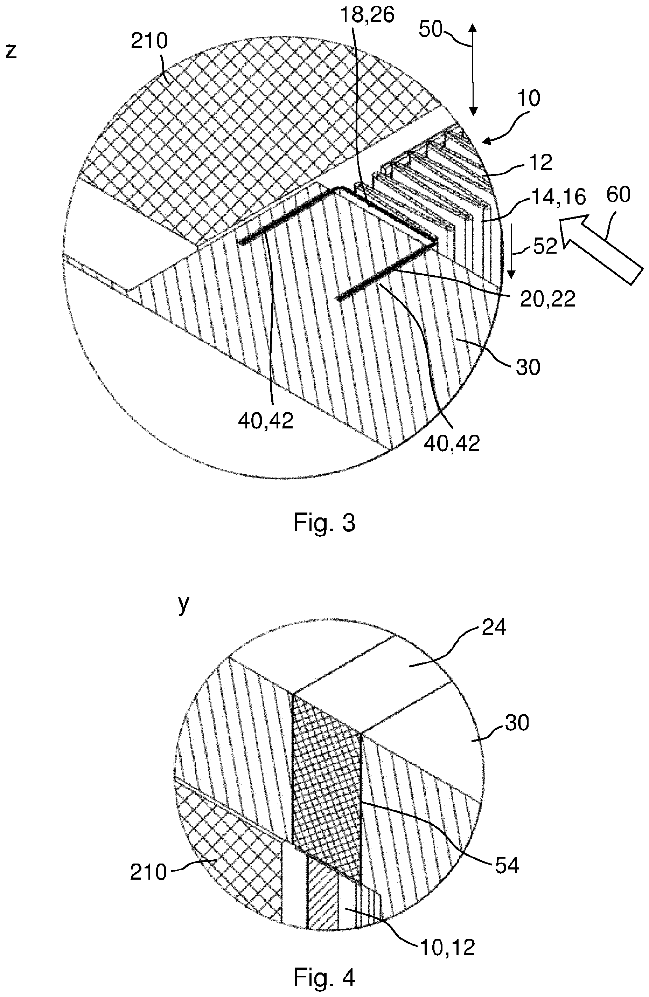

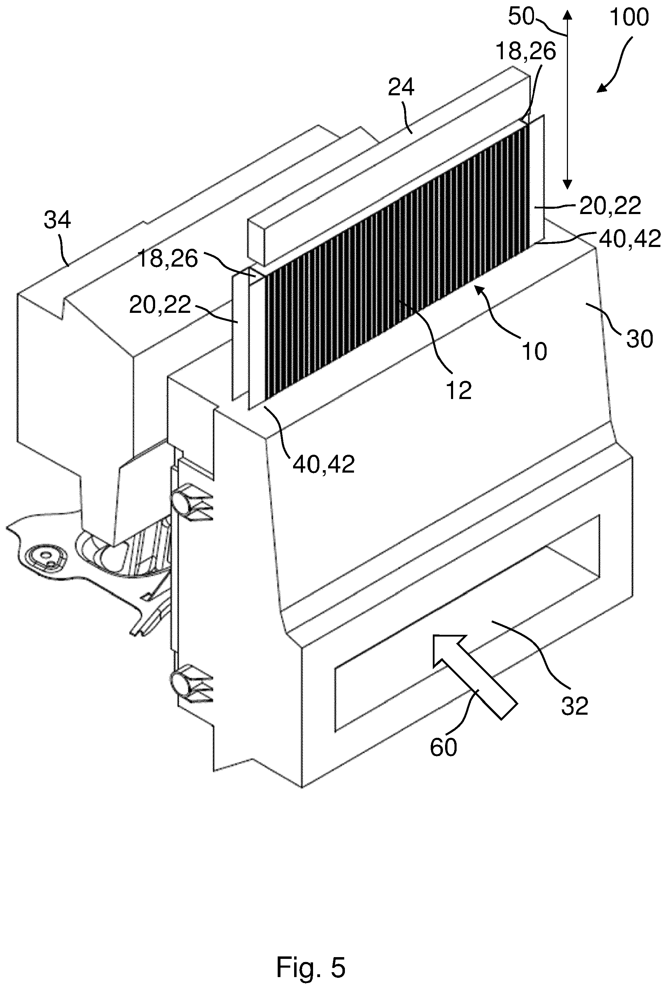

Figure 2 shows a partially sectioned isometric illustration of an ambient air filter device 100 according to an embodiment of the invention with marked regions Y and Z. In Figure 3, the illustration of the detail Z according to Figure 2 with a section through guide means 40 and counter guide means 20 of the filter element 10 is illustrated while in Figure 4 the illustration of the detail Y according to Figure 2 with a section through a cover 24 can be seen. Figure 5 shows an isometric illustration of the ambient air filter device 100 according to Figure 2 with partially pulled-out filter element 10.

The ambient air filter device 100, as can be seen in Figure 1, is arranged in the front region 202 of the motor vehicle 200, in particular adjacent to the heat exchanger 210 of the motor vehicle 200.

The ambient air filter device 100 comprises an installation frame 30 with an air inlet 32 and an air outlet 34 which at least partially circumferentially encloses a filter element receiving space 36. The installation frame 30 of the ambient air filter device 100 can be configured, for example, as part of a cowl, casing, and/or energy absorption structure present in the front region 202 of the motor vehicle 200 and arranged fixed to the vehicle. The heat exchanger 210 can be arranged directly adjoining the installation frame 30 but also, for example, so as to be integrated into the installation frame 30, as in the here illustrated embodiments. The air outlet 34 in this case is arranged in flow-through direction 60 behind the heat exchanger 210.

In an arrangement of use, the air inlet 32 as well as the air outlet 34 can be connected in fluid communication to the environment. In particular, the air inlet 32 can be configured to be flowed through by unfiltered ambient air in the arrangement of use, and the air outlet 34 can be configured to be flowed through by filtered ambient air in the arrangement of use.

In the installation frame 30, a filter element 10 is arranged that separates the air inlet 32 from the air outlet 34. At sides which are opposite each other and each face the filter element receiving space 36, the installation frame 30 comprises guide means 40 which are configured for mounting and/or demounting of the filter element 10 along an insertion direction or removal direction 50. The guide means 40 of the installation frame 30, which are configured for a linear guiding action, comprise a plurality of longitudinal guides 42 which are configured as guide grooves in the installation frame 30 in this embodiment.

As can be seen particularly in Figure 3, the filter element 10 comprises a filter medium body 12 which is enclosed by an at least partially circumferential element frame 18.

The filter element 10 comprises counter guide means 20 which engage in the longitudinal guides 42 configured as guide grooves. In this context, the counter guide means 20 are configured as strips 22 which are protruding away from the element frame 18 and face away from the filter medium body 12. In the embodiment illustrated in the Figures 2 to 5, sides of the element frame 18, which are facing away from each other and are arranged parallel to the insertion direction or removal direction 50 in the intended installation of the filter element 10, are provided with two strips 22, respectively.

The insertion direction or removal direction 50 can be oriented, for example, along an intended vertical direction 206 of the vehicle (see Figure 1) or at an acute angle to the intended vertical direction 206 of the vehicle.

The filter element 10 can be arranged advantageously in the ambient air filter device 100 in the installation frame 30 in that the filter element 10 is inserted with the counter guide means 20 into the longitudinal guides 42 configured as guide grooves.

The filter medium 14 of the filter medium body 12 can be preferably configured of synthetics in order to exhibit a minimal sensitivity in relation to an action of moisture of the ambient air. In this context, the filter medium 14 can be sealed transversely to a flow-through direction 60 at least in regions, in particular at end face edges of folds 16 of the filter medium 14, by means of synthetic nonwoven, for example, a lateral band, or by means of plastic over-molding.

The element frame 18 can be designed of a nonwoven as a lateral band, which serves for end face edge sealing of the folds 16 of the filter medium 14. The counter guide means 20 can be configured together with the element frame 18 as one piece, as part of the lateral band. Alternatively or additionally, strips 22 of the counter guide means 20 can be connected, in particular glued, to the element frame 18.

In an alternative embodiment, not illustrated, the filter medium body 12 can be molded around with plastic material which forms the element frame 18. In this context, the counter guide means 20 can be configured as one piece together with the element frame 18. Here also, the counter guide means 20 can be connected, in particular glued, to the element frame 18.

As can be seen in Figure 3, the counter guide means 20 in their length extension extend along a length extension of the filter medium body 12, in particular along a length extension 52 of folds 16 of the filter medium 14.

The counter guide means 20 comprise at least regions which extend parallel to an areal extension of the filter medium body 12. In this manner, the filter element 10 can be supported advantageously against the flow pressure upon flow of ambient air therethrough.

In the embodiment illustrated in Figures 2 to 5, two parallel strips 22 protruding away from the element frame 18 are respectively arranged at the sides of the element frame 18 facing away from each other. In this context, the strips 22 are arranged spaced apart in the flow-through direction 60 of the filter element 10. For this purpose, two corresponding longitudinal guides 42 configured as guide grooves are respectively arranged at sides of the installation frame 30 positioned opposite each other, in which the strips 22 engage upon insertion of the filter element 10 into the installation frame 30.

The filter element receiving space 36 can be closed by a cover 24 in the insertion direction or removal direction 50. Thus, the filter element 10 can be inserted through a mounting opening 54 into the installation frame 30 and, subsequently, the mounting opening 54 can be beneficially fluid-tightly closed by the cover 24 so that a directed fluid flow through the filter element 10 can be generated and the filter element 10 and thus the fluid flow is protected against external soiling.

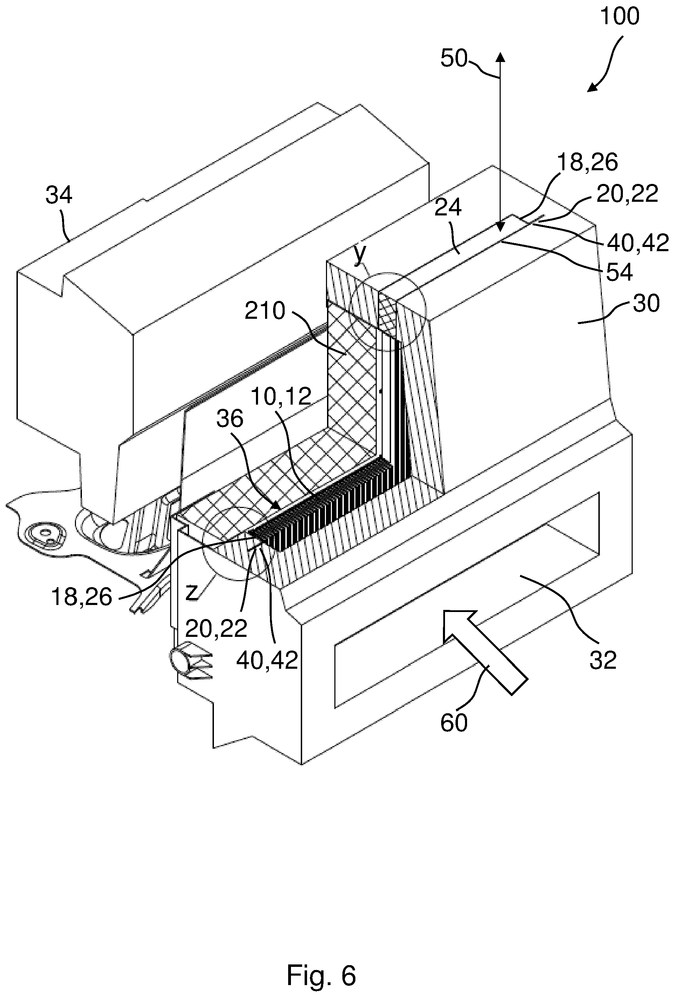

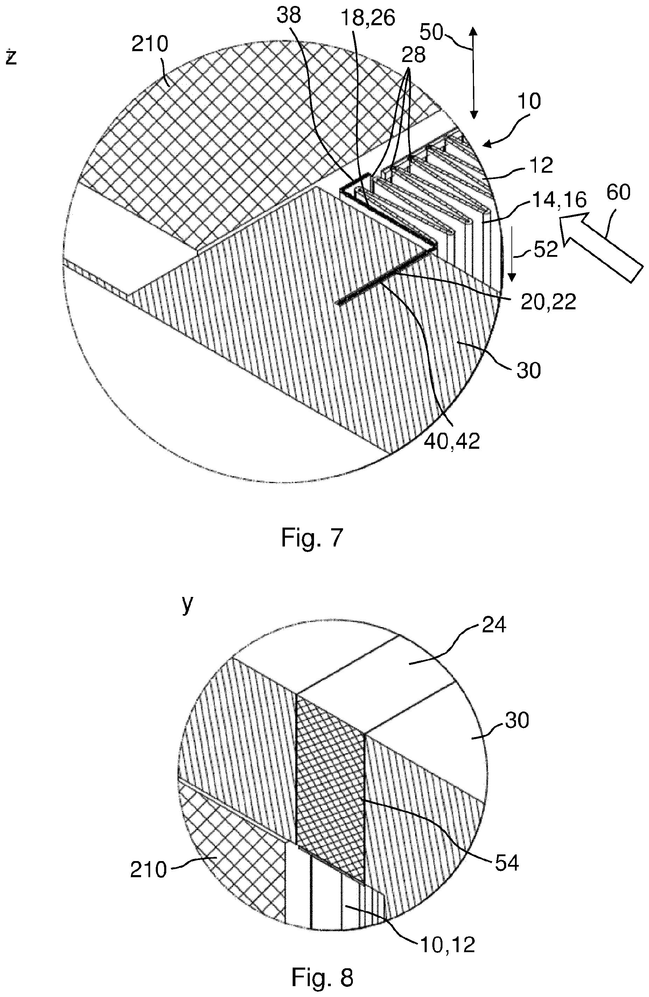

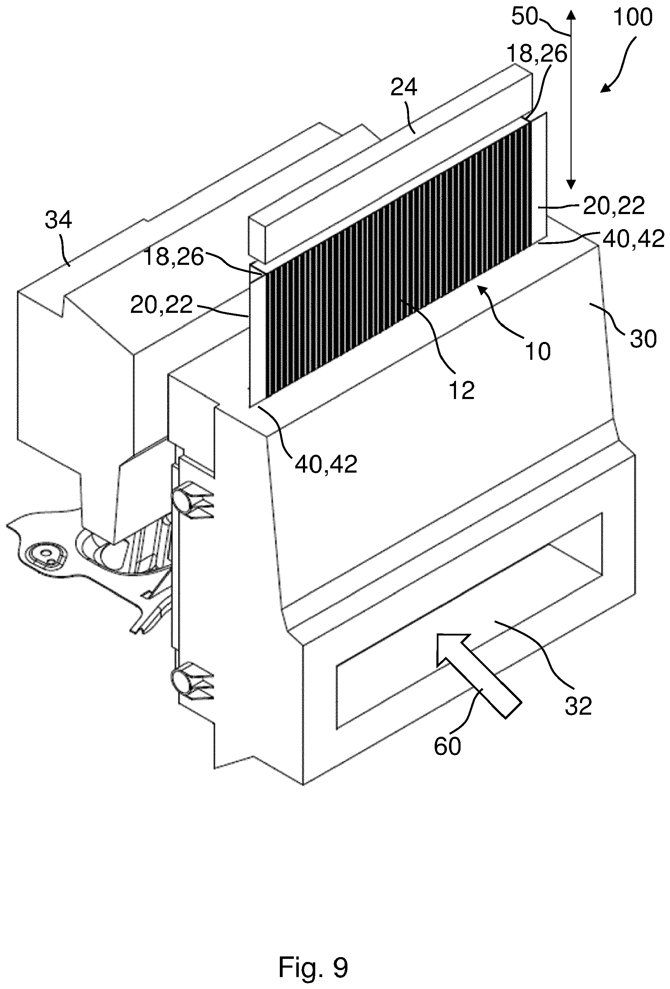

Figure 6 shows a partially sectioned isometric illustration of an ambient air filter device 100 according to an embodiment of the invention with marked regions Y and Z. In Figure 7, the illustration of the detail Z according to Figure 6 is illustrated with a section through guide means 40 and counter guide means 20 of the filter element 10 while in Figure 8 the illustration of the detail Y according to Figure 6 can be seen with a section through a cover 24. Figure 9 shows an isometric illustration of the ambient air filter device 100 according to Figure 6 with partially pulled-out filter element 10.

The embodiment illustrated in the Figures 6 to 9 of an ambient air filter device 100 comprises in principle the same features as the embodiment illustrated in the Figure 2 to 5. It differs in principle in the configuration of the guide means 40 and counter guide means 20.

The counter guide means 20 comprises at the sides of the element frame 18 which are facing away from each other at least only one strip 22, respectively. The strip 22 extends parallel to the areal extension of the filter medium body 12. In this way, the filter element 10 can be supported advantageously against the flow pressure upon flow of the ambient air therethrough. The element frame 30 comprises for this purpose a corresponding longitudinal guide 42 configured as a guide groove in which the strip 22 engages.

In addition, at oppositely positioned sides of the element frame 18 at least one reinforcement strip 38 is arranged, respectively, which is protruding away from the element frame 18 and facing the filter medium body 12 and which, at least in regions, extends along an areal extension of the filter medium body 12. In particular, the reinforcement strip 38 can be connected, in particular glued, at least in regions to the filter medium body 12, in particular to fold tips 28 of folds 16 of the filter medium body 12. The reinforcement strip 38 serve for reinforcing the filter element 10, in particular the filter medium body 12. Advantageously, the reinforcement strip 38 can be configured as one piece together with the lateral band as an element frame 18 in that a part of the lateral band is folded onto the flow-through surface of the filter medium body 12, in particular onto the fold tips 28 and is glued to the fold tips 28.

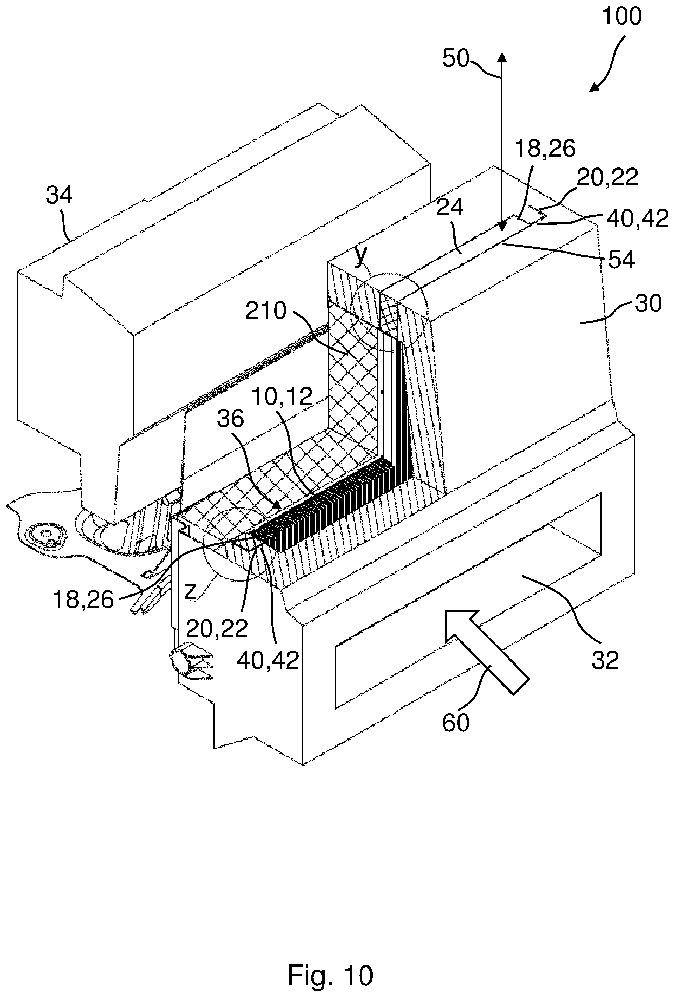

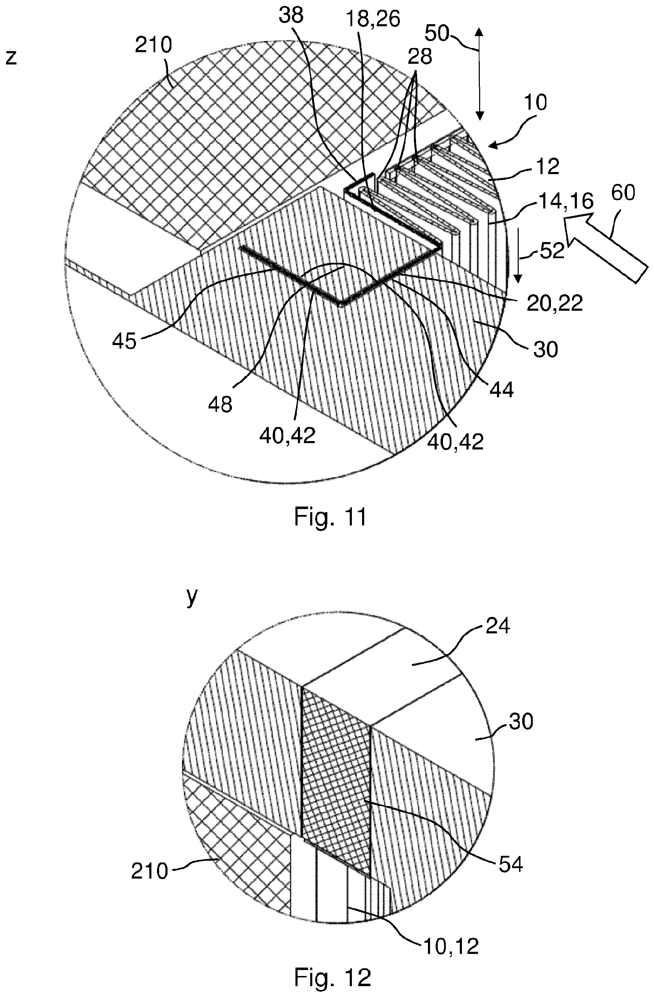

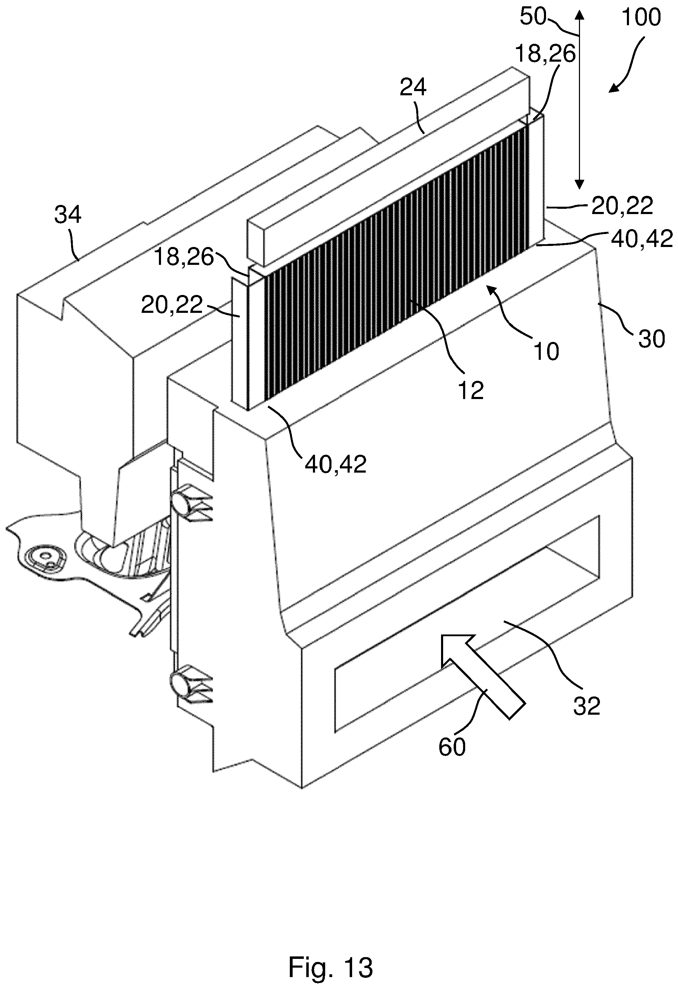

Figure 10 shows a partially sectioned isometric illustration of an ambient air filter device 100 according to an embodiment of the invention with marked regions Y and Z. In Figure 11, the illustration of the detail Z according to Figure 10 with a section through the guide means 40 and counter guide means 20 of the filter element 10 is illustrated while in Figure 12 the illustration of the detail Y according to Figure 10 with a section through a cover 24 can be seen. Figure 13 shows an isometric illustration of the ambient air filter device 100 according to Figure 10 with partially pulled-out filter element 10.

The embodiment illustrated in the Figures 10 to 13 of an ambient air filter device 100 comprises in principle the same features as the embodiment illustrated in the Figures 2 to 5. It differs in principle in the configuration of the guide means 40 and counter guide means 20.

The respective at least one strip 22 of the counter guide means 20 comprises at the sides of the element frame 18 facing away from each other at least two legs 44, 45 which define an angle 48, in this embodiment a right angle. Corresponding longitudinal guides 42 configured as guide grooves are configured in the installation frame 30 in which the strip engages with its two legs 44, 45.

The embodiment illustrated in Figures 10 to 13 comprises also a reinforcement strip 38 for reinforcing the filter medium 14.

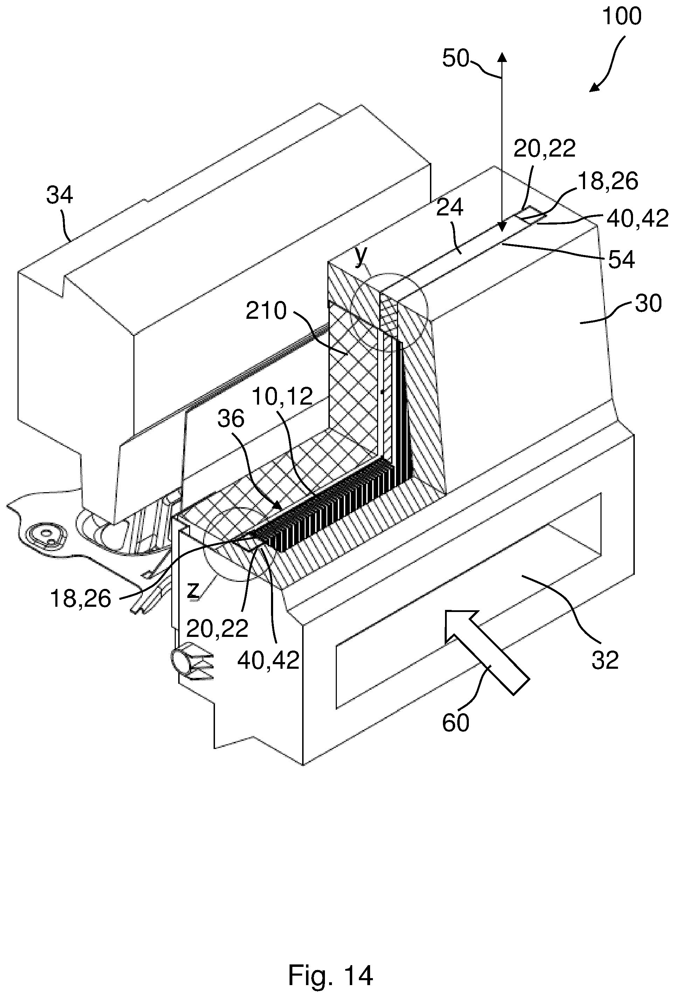

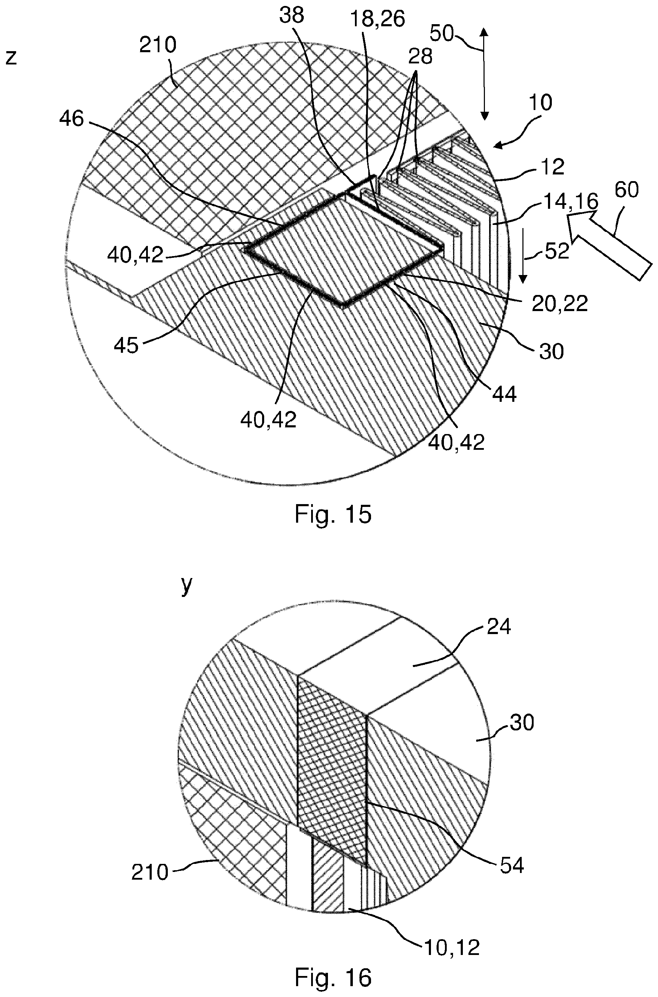

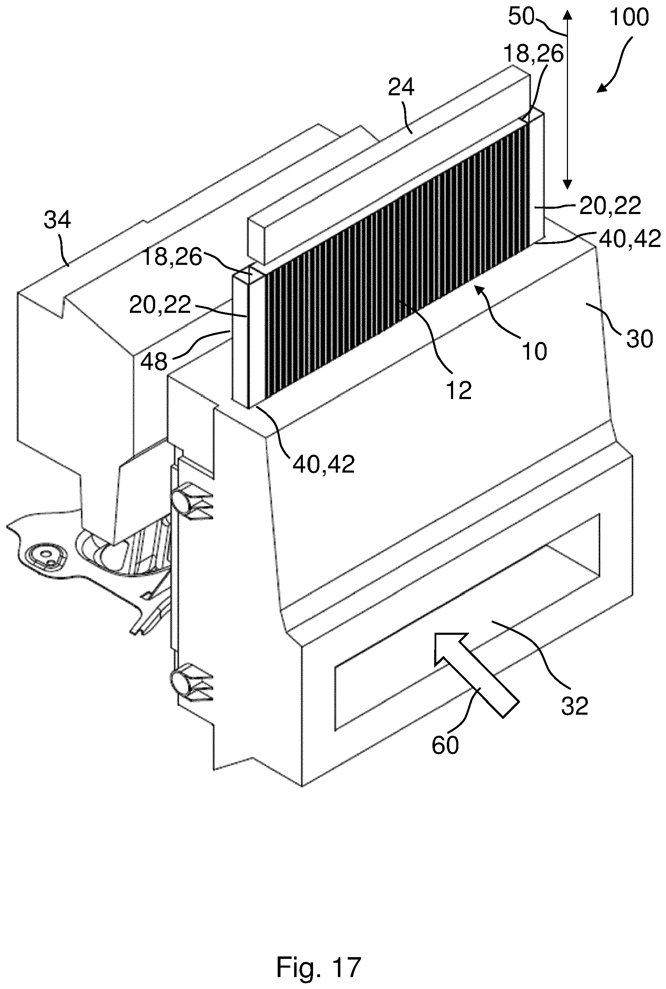

Figure 14 shows a partially sectioned isometric illustration of an ambient air filter device 100 according to an embodiment of the invention with marked regions Y and Z. In Figure 15, the illustration of the detail Z according to Figure 14 with a section through guide means 40 and counter guide means 20 of the filter element 10 is illustrated while in Figure 16 the illustration of the detail Y according to Figure 14 with a section through a cover 24 can be seen. Figure 17 shows an isometric illustration of the ambient air filter device 100 according to Figure 14 with partially pulled-out filter element 10.

The embodiment of an ambient air filter device 100 illustrated in Figures 14 to 17 comprises in principle the same features as the embodiment illustrated in the Figures 2 to 5. It differs in principle in the configuration of the guide means 40 and counter guide means 20.

The respective at least one strip 22 of the counter guide means 20 comprises at the sides of the element frame 18 facing away from each other three legs 44, 45, 46 which form together with the element frame 18 a closed cross section along an extension of the counter guide means 20. In the illustrated embodiment, the legs 44, 45, 46 form a square cross section.

The embodiment illustrated in Figures 14 to 17 comprises also a reinforcement strip 38 for reinforcing the filter medium 14.

Advantageously, in all illustrated embodiments the strips 22 of the counter guide means 20 as well as the reinforcement strips 38 can be formed of the lateral band of the element frame 18 by bending or folding of the lateral band along the length extension of the filter medium body 12.

The strips 22 of the counter guide means 20 must not necessarily extend across the entire length of the filter medium body 12. In embodiments, not illustrated, the strips 22 can also be formed only in sections along the extension of the filter medium body 12 in the insertion direction or removal direction 50.

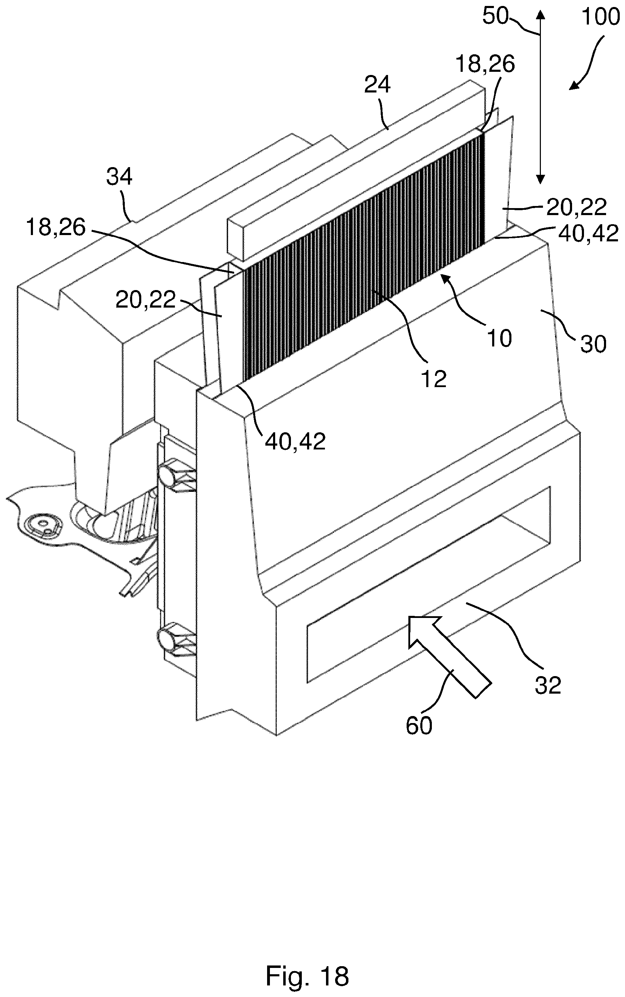

In the embodiment of the ambient air filter device 100 illustrated in Fig. 18, at least one counter guide means 20 of the filter element 10 comprises a protrusion which, viewed in the insertion direction 50, decreases. The counter guide means 20, which is protruding away from at least at one side of the element frame 18 and is facing away from the filter medium body 12, comprises in particular two strips 22 which are facing away from the filter medium body 12 and extend spaced apart and parallel to each other along the insertion direction 50. The strips 22 comprises in particular a protrusion, respectively, which decreases viewed in the insertion direction 50. In this context, the protrusion of the strips 22 decreases advantageously continuously in insertion direction 50 so that the strips 22 form a trapezoidal or triangular shape. In other words, the protrusion of the strips 22 in insertion direction 50 is less at the front than at the rear in the insertion direction 50. However, it is expressly encompassed by the invention that only at one side of the filter element 10 a counter guide means 20 with a variable protrusion is present or even only one strip 22 of a counter guide means 20 present at one side of the filter element 10 has a variable protrusion. Such asymmetric arrangements provide the advantage of an installation safeguard which prevents that a wrong filter element 10 is installed or that the filter element 10 is installed backward. Due to at least one counter guide means 20 with a protrusion decreasing in the insertion direction 50, reduced friction forces upon insertion of the filter element 10 into the guide means 40 with at least one longitudinal guide 42 are generated as a further positive effect so that the required mounting/demounting forces can be reduced in this way.

In preferred embodiment, the at least one counter guide means 20 with decreasing protrusion in insertion direction 50 appears in combination with a corresponding guide means 40 of the installation frame 30 which comprises at least one longitudinal guide 42 configured, for example, as a guide groove and comprising a decreasing groove depth, viewed in the insertion direction 50. A depth extension of the longitudinal guides 42 configured as guide groove corresponds in this context advantageously with the variable course of the protrusion in insertion direction 50 of the at least one strip 22 of the counter guide means 20.

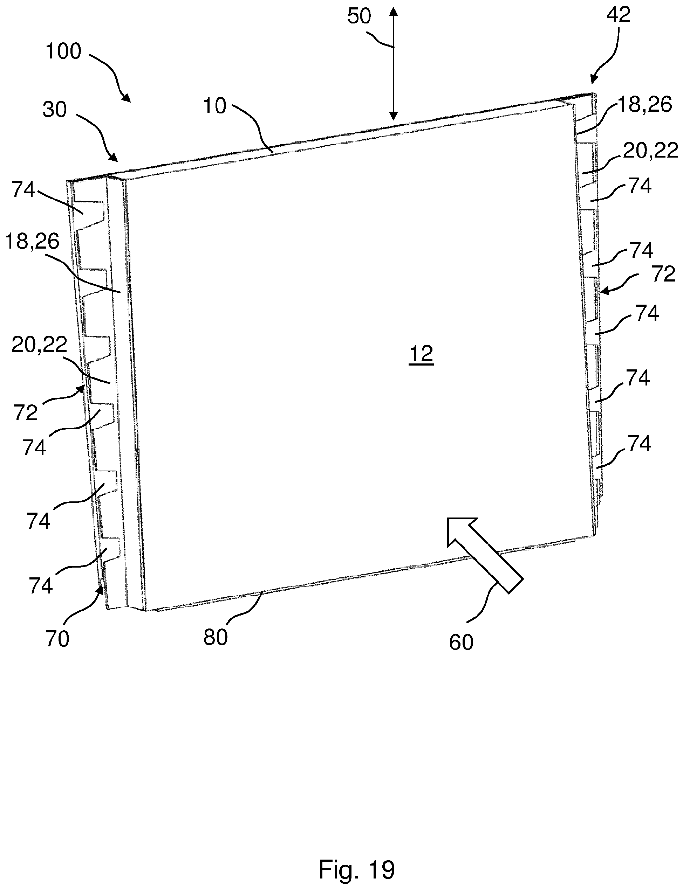

Figures 19 to 21 show a further embodiment of an installation frame 30 of an ambient air filter device 100, not illustrated in detail, in different illustrations.

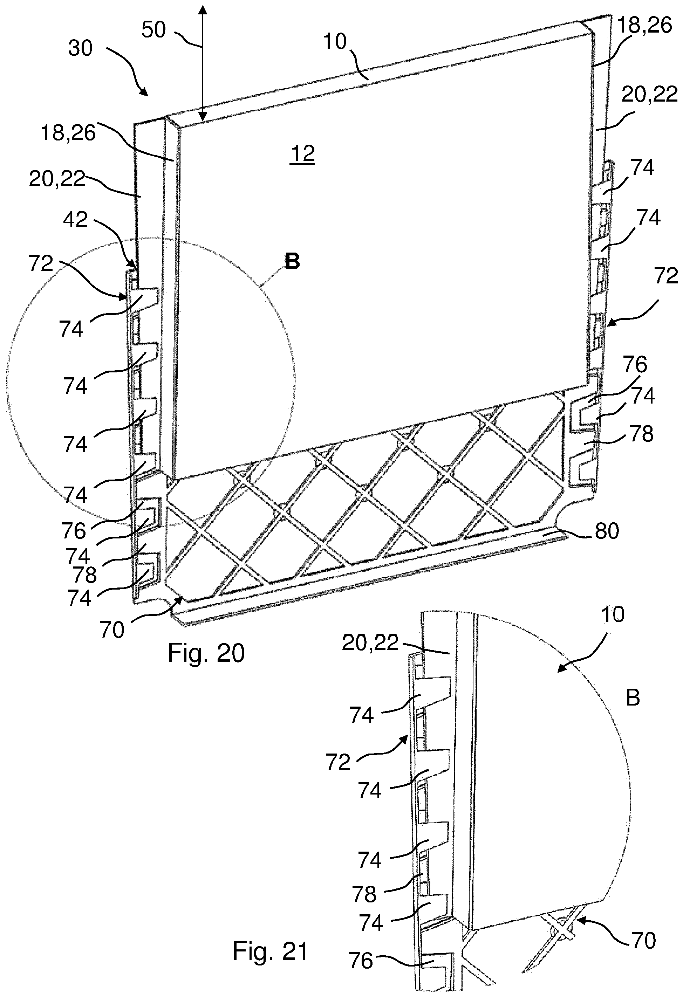

Fig. 19 shows an installation frame 30 with a filter element 10 inserted therein as a particularly flat configuration of the installation frame 30 in isometric illustration, which installation frame 30 is configured as a planar grid 70 and fixed at the vehicle. Fig. 20 shows the filter element 10 according to Figure 19 upon insertion behind lateral tines 74 which are angled away from a grid surface and behind which a receptacle of the grid 70 for the counter guide means 20 of the filter element 10 is configured, and Fig. 21 shows the detail B of Figure 20.

The installation frame 30 can be fastened with suitable means, for example, screw connections, locking connections or the like, in the front region of a motor vehicle, in particular adjacent to at least one heat exchanger of the motor vehicle.

The filter element 10 is inserted into the receptacles of the grid 70 present at both sides at oppositely positioned rims 72 all the way to an end stop 80 of the grid 70 which is arranged at the lower end of the grid 70, viewed in the insertion direction 50. At its lateral rims 72, the grid 70 comprises alternatingly arranged front tines 74 and rear tines 78, wherein each front tine 74 is arranged in front of a cutout 76 which is embodied in the insertion direction and removal direction 50 between two sequentially arranged rear tines 78, respectively.

With its counter guide means 20 in form of strips 22 protruding at both sides away from the filter element 10, the filter element 10 is pushed in between the grid surface, respectively, the rear tines 78 and the tines 74 which are angled away from the grid surface.

The rear tines 78 can be designed larger than the front tines 74. The rear tines 78 can be aligned with the grid surface or can be angled away, in the Figure to the rear.

Due to the arrangement of the filter element 10 on the flat grid 70 permeable to flow, the contact of the filter element 10 with the radiator can be avoided. The flat configuration is particularly installation space-saving. Due to the use of the flat configuration, a movement in x direction (travel direction of the vehicle) can be avoided. Due to the end stop 80 at the bottom side of the grid 70 in relation to the insertion direction 50, an otherwise required force of the receptacle of the longitudinal guide 42, configured in the form of a linear guide between the tines 74, 78, can be reduced.

The grid 70 is preferably configured of plastic material and can be produced as one piece together with the tines 74, 78 and end stop 80.

The tines 74, 78 hold the filter element 10 or its counter guide means 20 (strips 22) only at the rim. The extension of the plastic material of the grid 70 in x direction, the normal travel direction of the vehicle, can thus be minimal and must be present only at select locations, the leading tines 74.

The embodiment of the frame of the grid 70 can be rectangular as well as conical, as illustrated in Figs. 19 to 21. The conical shape comprises the advantage of a poka-yoke principle with which it is ensured that the filter element is correctly mounted.

### REFERENCE SIGNS LIST

- 10: filter element
- 12: filter medium body
- 14: filter medium
- 16: folds
- 18: element frame
- 20: counter guide means
- 22: strip
- 24: cover
- 26: lateral band
- 28: fold tip
- 30: installation frame
- 32: air inlet
- 34: air outlet
- 36: filter element receiving space
- 38: reinforcement strip
- 40: guide means
- 42: longitudinal guide
- 44: leg
- 45: leg
- 46: leg
- 48: angle
- 50: insertion direction or removal direction
- 52: length extension folds
- 54: mounting opening
- 60: flow-through direction
- 70: grid
- 72: rim
- 74: tine
- 76: cutout
- 78: tine
- 80: end stop
- 100: air filter device
- 200: motor vehicle
- 202: front region
- 204: air inlet opening
- 206: vertical direction of vehicle
- 210: heat exchanger
- 212: blower

## Claims

1. A filter element (10) for use with an ambient air filter device (100) for arrangement in a front region (202) of a motor vehicle (200), in particular adjacent to at least one heat exchanger (210) of the motor vehicle (200), the filter element (10) comprising:
a filter medium body (12) which is enclosed by an at least partially circumferential element frame (18),
counter guide means (20) for engaging one or a plurality of longitudinal guides (42) of guide means of an installation frame of the ambient air filter device (100),
wherein the counter guide means (20) protrude away from the element frame (18) and face away from the filter medium body (12) to form a protrusion and are configured with a predetermined extension in the insertior direction or removal direction (50) for intended installation of the filter element (10),
wherein at least one counter guide means (20) is respectively present at sides of the element frame (18), which are facing away from each other and are arranged parallel to the insertion direction or removal direction (50),
**characterized in that**
the protrusion of at least one of the counter guide means (20) decreases with increasing depth of the filter element (10) *when viewed in direction of insertion,*
wherein the at least one counter guide means (20) forms in particular a linear, progressive, degressive, or stepped course,
wherein in particular at least one longitudinal guide (42) of at least one guide means (40) of the installation frame (30) corresponding with the at least one counter guide means (20) tapers, viewed in insertion direction (50).

2. The filter element (10) according to claim 1, wherein the counter guide means (20) are respectively configured as strips (22) facing away from the filter medium body (12) and/or
wherein the counter guide means (20) extend in their length extension along a length extension of the filter medium body (12), in particular extend in their length extension along a length extension (52) of folds (16) of the filter medium (14);

3. The filter element (10) according to one of the preceding claims, wherein the element frame (18) is configured of a nonwoven, and
wherein in particular the counter guide means (20) are configured as one piece together with the element frame (18) or are connected, in particular glued, to the element frame (18).

4. The filter element (10) according to one of the preceding claims, wherein the filter medium body (12) is molded around with plastic material which forms the element frame (18), and
wherein the counter guide means (20) are configured as one piece together with the element frame (18) or are connected, in particular glued, to the element frame (18), and/or
wherein the counter guide means (20) comprise at least regions which extend parallel to an areal extension of the filter medium body (12).

5. The filter element (10) according to one of the preceding claims, wherein two in particular parallel strips (22) protruding away from the element frame (18) are respectively arranged at sides of the element frame (18) facing away from each other, wherein the strips (22), in particular in a flow-through direction (60) of the filter element (10), are arranged spaced apart from each other, and wherein two longitudinal guides (42) corresponding therewith are arranged respectively at sides of the installation frame (30) which are positioned opposite each other.

6. The filter element (10) according to one of the preceding claims, wherein the respective at least one strip (22) at the sides of the element frame (18) facing away from each other comprises at least two legs (44, 45) which define an angle (48), in particular a right angle.

7. The filter element (10) according to claim 6, wherein at least two legs (44, 45), in particular at least three legs (44, 45, 46), of the respective at least one strip (22) at the sides of the element frame (18) facing away from each other form with the element frame (18) an in particular closed cross section, in particular a rectangular, in particular square, cross section, along an extension of the counter guide means (20).

8. The filter element (10) according to one of the preceding claims, wherein at sides of the element frame (18) oppositely positioned relative to each other at least one reinforcement strip (38) protruding away from the element frame (18) and facing the filter medium body (12) is respectively arranged which extends, at least in regions, along an areal extension of the filter medium body (12), in particular wherein the respective at least one reinforcement strip (38) is connected, in particular glued, at least in regions to the filter medium body (12), in particular to fold tips (28) of folds (16) of the filter medium body (12).

9. Ambient air filter device (100) for arrangement in a front region (202) of a motor vehicle (200), in particular adjacent to at least one heat exchanger (210) of the motor vehicle (200), comprising:
at least one installation frame (30) with an air inlet (32) and an air outlet (34), which at least partially circumferentially encloses a filter element receiving space (36),
wherein the filter element (10) of any one of the preceding claims is receivable in the installation frame (30) to separate the air inlet (32) from the air outlet (34),
wherein the installation frame (30), at sides positioned opposite each other and facing respectively the filter element receiving space (36), comprises guide means (40) which are configured for mounting and/or demounting the filter element (10) along an insertion direction or removal direction (50),
wherein the guide means (40) of the installation frame (30) comprise one or a plurality of longitudinal guides (42) for engaging counter guide means (20) of the filter element (10),
wherein in an arrangement of use, the air inlet (32) as well as the air outlet (34) are connected in fluid communication to the environment, the air inlet (32) being configured to be flowed through by unfiltered ambient air in the arrangement of use, and the air outlet (34) being configured to be flowed through by filtered ambient air in the arrangement of use.

10. Ambient air filter device according to claim 9, wherein the filter element receiving space (36) is closable by a cover (24) *wherein the filter element (10) can be inserted through a mounting opening (54) into the installation frame (30) and, subsequently, the mounting opening (54) can be fluid-tightly closed by the cover (24).*

11. Ambient air filter device according to one of claims 9 or 10, wherein the installation frame (30) is formed by a grid (70) which is permeable to flow and at which the filter element (10) can be arranged.

12. Motor vehicle (200), in particular a street vehicle, in particular passenger car, bus, truck, or rail vehicle, in particular railcar, locomotive, comprising in a front region (202) at least one air inlet opening (204) behind which an ambient air filter device (100) according to one of the claims 9 to 11 is arranged which is configured in particular for removal of particles, in particular particulate matter, and/or gases from the ambient air.

13. Motor vehicle according to claim 12, wherein the insertion direction or removal direction (50) is oriented in an intended vertical direction (206) of the vehicle or at an acute angle to the intended vertical direction (206) of the vehicle.

14. Motor vehicle according to claim 12 or 13, wherein the installation frame (30) of the ambient air filter device (100) is configured as part of a cowl, casing, air guiding structure and/or energy absorption structure present in a front region (202) of the motor vehicle.

## Patentansprüche

1. Filterelement (10) zur Verwendung mit einer Umgebungsluftfiltervorrichtung (100) für eine Anordnung in einem vorderen Bereich (202) eines Motorfahrzeugs (200), insbesondere angrenzend an mindestens einem Wärmetauscher (210) des Motorfahrzeugs (200), das Filterelement (10) umfassend:
einen Filtermediumkörper (12), der durch einen mindestens teilweise umlaufenden Elementrahmen (18) umschlossen ist,
Gegenführungsmittel (20) zum Eingreifen in eine oder eine Vielzahl von Längsführungen (42) von Führungsmitteln eines Einbaurahmens der Umgebungsluftfiltervorrichtung (100),
wobei die Gegenführungsmittel (20) von dem Elementrahmen (18) vorstehen und von dem Filtermediumkörper (12) abgewandt sind, um einen Vorsprung auszubilden, und mit einer vorbestimmten Erstreckung in der Einsetzrichtung oder Entnahmerichtung (50) für den beabsichtigten Einbau des Filterelements (10) ausgebildet sind,
wobei mindestens ein Gegenführungsmittel (20) jeweils an Seiten des Elementrahmens (18) vorhanden ist, die voneinander abgewandt sind und parallel zu der Einsetzrichtung oder Entnahmerichtung (50) angeordnet sind,
**dadurch gekennzeichnet, dass**
der Vorsprung mindestens eines der Gegenführungsmittel (20) mit zunehmender Tiefe des Filterelements (10) abnimmt, *wenn in Richtung der Einsetzung betrachtet,*
wobei das mindestens eine Gegenführungsmittel (20) insbesondere einen linearen, progressiven, degressiven oder gestuften Verlauf ausbildet,
wobei sich insbesondere mindestens eine Längsführung (42) mindestens eines Führungsmittels (40) des Einbaurahmens (30), die dem mindestens einen Gegenführungsmittel (20) entspricht, in Einsetzrichtung (50) betrachtet verjüngt.

2. Filterelement (10) nach Anspruch 1, wobei die Gegenführungsmittel (20) jeweils als von dem Filtermediumkörper (12) abgewandte Streifen (22) konfiguriert sind und/oder
wobei sich die Gegenführungsmittel (20) in ihrer Längenerstreckung entlang einer Längenerstreckung des Filtermediumkörpers (12) erstrecken, sich insbesondere in ihrer Längenerstreckung entlang einer Längenerstreckung (52) von Falten (16) des Filtermediums (14) erstrecken;

3. Filterelement (10) nach einem der vorstehenden Ansprüche, wobei der Elementrahmen (18) aus einem Vliesstoff konfiguriert ist, und
wobei insbesondere die Gegenführungsmittel (20) einstückig zusammen mit dem Elementrahmen (18) konfiguriert sind oder mit dem Elementrahmen (18) verbunden, insbesondere verklebt, sind.

4. Filterelement (10) nach einem der vorstehenden Ansprüche, wobei der Filtermediumkörper (12) mit Kunststoffmaterial umspritzt ist, das den Elementrahmen (18) ausbildet, und
wobei die Gegenführungsmittel (20) einstückig zusammen mit dem Elementrahmen (18) konfiguriert sind oder mit dem Elementrahmen (18) verbunden, insbesondere verklebt, sind, und/oder
wobei die Gegenführungsmittel (20) mindestens Bereiche umfassen, die sich parallel zu einer Flächenerstreckung des Filtermediumkörpers (12) erstrecken.

5. Filterelement (10) nach einem der vorstehenden Ansprüche, wobei zwei insbesondere parallele, von dem Elementrahmen (18) vorstehende Streifen (22) jeweils an voneinander abgewandten Seiten des Elementrahmens (18) angeordnet sind, wobei die Streifen (22), insbesondere in einer Durchströmungsrichtung (60) des Filterelements (10), beabstandet voneinander angeordnet sind, und wobei zwei diesen entsprechende Längsführungen (42) jeweils an Seiten des Einbaurahmens (30), die einander gegenüberliegend positioniert sind, angeordnet sind.

6. Filterelement (10) nach einem der vorstehenden Ansprüche, wobei der jeweilige mindestens eine Streifen (22) an den voneinander abgewandten Seiten des Elementrahmens (18) mindestens zwei Schenkel (44, 45) umfasst, die einen Winkel (48) definieren, insbesondere einen rechten Winkel.

7. Filterelement (10) nach Anspruch 6, wobei mindestens zwei Schenkel (44, 45), insbesondere mindestens drei Schenkel (44, 45, 46), des jeweiligen mindestens einen Streifens (22) an den voneinander abgewandten Seiten des Elementrahmens (18) mit dem Elementrahmen (18) einen insbesondere geschlossenen Querschnitt, insbesondere einen rechteckigen, insbesondere quadratischen, Querschnitt entlang einer Erstreckung der Gegenführungsmittel (20) ausbilden.

8. Filterelement (10) nach einem der vorstehenden Ansprüche, wobei an Seiten des Elementrahmens (18), die einander gegenüberliegend positioniert sind, mindestens ein Verstärkungsstreifen (38), der von dem Elementrahmen (18) vorspringt und dem Filtermediumkörper (12) zugewandt ist, jeweils angeordnet ist, der sich mindestens bereichsweise entlang einer Flächenerstreckung des Filtermediumkörpers (12) erstreckt, insbesondere wobei der jeweilige mindestens eine Verstärkungsstreifen (38) mindestens bereichsweise mit dem Filtermediumkörper (12) verbunden, insbesondere verklebt, ist, insbesondere mit Faltenspitzen (28) von Falten (16) des Filtermediumkörpers (12).

9. Umgebungsluftfiltervorrichtung (100) für die Anordnung in einem vorderen Bereich (202) eines Motorfahrzeugs (200), insbesondere angrenzend an mindestens einem Wärmetauscher (210) des Motorfahrzeugs (200), umfassend:
mindestens einen Einbaurahmen (30) mit einem Lufteinlass (32) und einem Luftauslass (34), der einen Filterelementaufnahmeraum (36) mindestens teilweise umlaufend umschließt,
wobei das Filterelement (10) nach einem der vorstehenden Ansprüche in dem Einbaurahmen (30) aufnehmbar ist, um den Lufteinlass (32) von dem Luftauslass (34) zu trennen,
wobei der Einbaurahmen (30), an Seiten, die einander gegenüberliegend positioniert sind und jeweils dem Filterelementaufnahmeraum (36) zugewandt sind, Führungsmittel (40) umfasst, die zum Montieren und/oder Demontieren des Filterelements (10) entlang einer Einsetzrichtung oder Entnahmerichtung (50) ausgebildet sind,
wobei die Führungsmittel (40) des Einbaurahmens (30) eine oder eine Vielzahl von Längsführungen (42) zum Eingreifen in Gegenführungsmittel (20) des Filterelements (10) umfassen,
wobei in einer Verwendungsanordnung der Lufteinlass (32) sowie der Luftauslass (34) in Fluidverbindung mit dem Umfeld verbunden sind, wobei der Lufteinlass (32) konfiguriert ist, um in der Verwendungsanordnung durch ungefilterte Umgebungsluft durchströmt zu werden, und der Luftauslass (34) konfiguriert ist, um in der Verwendungsanordnung durch gefilterte Umgebungsluft durchströmt zu werden.

10. Umgebungsluftfiltervorrichtung nach Anspruch 9, wobei der Filterelementaufnahmeraum (36) durch eine Abdeckung (24) verschließbar ist, *wobei das Filterelement (10) durch eine Montageöffnung (54) in den Einbaurahmen (*30*) eingesetzt werden kann und anschließend die Montageöffnung (54) durch die Abdeckung (24) fluiddicht verschlossen werden kann.*

11. Umgebungsluftfiltervorrichtung nach einem der Ansprüche 9 oder 10, wobei der Einbaurahmen (30) durch ein Gitter (70) ausgebildet ist, das für eine Strömung durchlässig ist und an dem das Filterelement (10) angeordnet werden kann.

12. Kraftfahrzeug (200), insbesondere ein Straßenfahrzeug, insbesondere ein Personenkraftwagen, ein Bus, ein Lastkraftwagen, oder ein Schienenfahrzeug, insbesondere ein Triebwagen, eine Lokomotive, umfassend in einem vorderen Bereich (202) mindestens eine Lufteinlassöffnung (204), hinter der eine Umgebungsluftfiltervorrichtung (100) nach einem der Ansprüche 9 bis 11 angeordnet ist, die insbesondere für die Entfernung von Partikeln, insbesondere Feinstaub, und/oder Gasen aus der Umgebungsluft konfiguriert ist.

13. Kraftfahrzeug nach Anspruch 12, wobei die Einsetzrichtung oder Entnahmerichtung (50) in einer beabsichtigten vertikalen Richtung (206) des Fahrzeugs oder in einem spitzen Winkel zu der beabsichtigten vertikalen Richtung (206) des Fahrzeugs ausgerichtet ist.

14. Motorfahrzeug nach Anspruch 12 oder 13, wobei der Einbaurahmen (30) der Umgebungsluftfiltervorrichtung (100) als Teil eines Windlaufs, eines Gehäuses, einer Luftführungsstruktur und/oder einer Energieabsorptionsstruktur konfiguriert ist, die in einem vorderen Bereich (202) des Motorfahrzeugs vorhanden ist.

## Revendications

1. Élément filtrant (10) destiné à être utilisé avec un dispositif de filtration d'air ambiant (100) pour un agencement dans une région avant (202) d'un véhicule automobile (200), en particulier de manière à être adjacent à au moins un échangeur de chaleur (210) du véhicule automobile (200), l'élément filtrant (10) comprenant :
un corps de couche filtrante (12) qui est entouré par un cadre d'élément (18) au moins partiellement circonférentiel,
des moyens de contre-guidage (20) pour venir en prise avec un ou une pluralité de guides longitudinaux (42) de moyens de guidage d'un cadre d'installation du dispositif de filtration d'air ambiant (100),
dans lequel les moyens de contre-guidage (20) font saillie à l'écart du cadre d'élément (18) et sont tournés à l'opposé du corps de couche filtrante (12) pour former une saillie et sont conçus avec une extension prédéterminée dans la direction d'insertion ou la direction de retrait (50) pour l'installation prévue de l'élément filtrant (10),
dans lequel au moins un moyen de contre-guidage (20) est respectivement présent sur des côtés du cadre d'élément (18), qui sont tournés à l'opposé l'un de l'autre et sont agencés parallèlement à la direction d'insertion ou à la direction de retrait (50),
**caractérisé en ce que**
la saillie d'au moins l'un des moyens de contre-guidage (20) diminue avec l'augmentation de la profondeur de l'élément filtrant (10), *lorsqu'elle est vue dans la direction d'insertion,*
dans lequel l'au moins un moyen de contre-guidage (20) forme en particulier un parcours linéaire, progressif, dégressif ou étagé,
dans lequel, en particulier, au moins un guide longitudinal (42) d'au moins un moyen de guidage (40) du cadre d'installation (30) correspondant à l'au moins un moyen de contre-guidage (20) s'effile, lorsqu'il est vu dans la direction d'insertion (50).

2. Élément filtrant (10) selon la revendication 1, dans lequel les moyens de contre-guidage (20) sont respectivement conçus sous forme de bandes (22) tournées à l'opposé du corps de couche filtrante (12) et/ou
dans lequel les moyens de contre-guidage (20) s'étendent dans leur extension longitudinale le long d'une extension longitudinale du corps de couche filtrante (12), en particulier, s'étendent dans leur extension longitudinale le long d'une extension longitudinale (52) de plis (16) de la couche filtrante (14).

3. Élément filtrant (10) selon l'une des revendications précédentes, dans lequel le cadre d'élément (18) est conçu à partir d'un non-tissé, et
dans lequel, en particulier, les moyens de contre-guidage (20) sont conçus en une seule pièce conjointement avec le cadre d'élément (18) ou sont reliés, en particulier collés, au cadre d'élément (18).

4. Élément filtrant (10) selon l'une des revendications précédentes, dans lequel le corps de couche filtrante (12) est surmoulé avec une matière plastique qui forme le cadre d'élément (18), et
dans lequel les moyens de contre-guidage (20) sont conçus en une seule pièce conjointement avec le cadre d'élément (18) ou sont reliés, en particulier collés, au cadre d'élément (18), et/ou
dans lequel les moyens de contre-guidage (20) comprennent au moins des régions qui s'étendent parallèlement à une extension surfacique du corps de couche filtrante (12).

5. Élément filtrant (10) selon l'une des revendications précédentes, dans lequel deux bandes (22), en particulier parallèles, faisant saillie à l'écart du cadre d'élément (18) sont respectivement agencées sur des côtés du cadre d'élément (18) tournés à l'opposé l'un de l'autre, dans lequel les bandes (22), en particulier dans une direction d'écoulement (60) de l'élément filtrant (10), sont agencées à distance l'une de l'autre, et dans lequel deux guides longitudinaux (42) correspondants sont agencés respectivement sur des côtés du cadre d'installation (30) qui sont positionnés à l'opposé l'un de l'autre.

6. Élément filtrant (10) selon l'une des revendications précédentes, dans lequel l'au moins une bande (22) respective sur les côtés du cadre d'élément (18) tournés à l'opposé l'un de l'autre comprend au moins deux branches (44, 45) qui définissent un angle (48), en particulier un angle droit.

7. Élément filtrant (10) selon la revendication 6, dans lequel au moins deux branches (44, 45), en particulier au moins trois branches (44, 45, 46), de l'au moins une bande (22) respective sur les côtés du cadre d'élément (18) tournés à l'opposé l'un de l'autre forment avec le cadre d'élément (18) une section transversale en particulier fermée, en particulier une section transversale rectangulaire, en particulier carrée, le long d'une extension des moyens de contre-guidage (20).

8. Élément filtrant (10) selon l'une des revendications précédentes, dans lequel est respectivement agencée, sur des côtés du cadre d'élément (18) positionnés à l'opposé l'un de l'autre, au moins une bande de renforcement (38) faisant saillie à l'écart du cadre d'élément (18) et faisant face au corps de couche filtrante (12), laquelle s'étend, au moins par zones, le long d'une extension surfacique du corps de couche filtrante (12), en particulier dans lequel l'au moins une bande de renforcement (38) respective est reliée, en particulier collée, au moins par zones, au corps de couche filtrante (12), en particulier à des pointes de plis (28) de plis (16) du corps de couche filtrante (12).

9. Dispositif de filtration d'air ambiant (100) pour un agencement dans une région avant (202) d'un véhicule automobile (200), en particulier de manière à être adjacent à au moins un échangeur de chaleur (210) du véhicule automobile (200), comprenant :
au moins un cadre d'installation (30) avec une entrée d'air (32) et une sortie d'air (34), qui entoure circonférentiellement, au moins partiellement, un espace de réception d'élément filtrant (36),
dans lequel l'élément filtrant (10) selon l'une quelconque des revendications précédentes peut être reçu dans le cadre d'installation (30) pour séparer l'entrée d'air (32) de la sortie d'air (34),
dans lequel le cadre d'installation (30), sur des côtés positionnés à l'opposé l'un de l'autre et faisant respectivement face à l'espace de réception d'élément filtrant (36), comprend des moyens de guidage (40) qui sont conçus pour le montage et/ou le démontage de l'élément filtrant (10) le long d'une direction d'insertion ou d'une direction de retrait (50),
dans lequel les moyens de guidage (40) du cadre d'installation (30) comprennent un ou une pluralité de guides longitudinaux (42) pour venir en prise avec des moyens de contre-guidage (20) de l'élément filtrant (10),
dans lequel, dans un agencement d'utilisation, l'entrée d'air (32), ainsi que la sortie d'air (34), sont reliées en communication fluidique à l'environnement, l'entrée d'air (32) étant conçue pour être traversée par de l'air ambiant non filtré dans l'agencement d'utilisation, et la sortie d'air (34) étant conçue pour être traversée par de l'air ambiant filtré dans l'agencement d'utilisation.

10. Dispositif de filtration d'air ambiant selon la revendication 9, dans lequel l'espace de réception d'élément filtrant (36) peut être fermé par un couvercle (24), *dans lequel l'élément filtrant (10) peut être inséré à travers une ouverture de montage (54) dans le cadre d'installation (*30*) et, par la suite, l'ouverture de montage (54) peut être fermée de manière étanche aux fluides par le couvercle (24).*

11. Dispositif de filtration d'air ambiant selon l'une des revendications 9 ou 10, dans lequel le cadre d'installation (30) est formé par une grille (70) qui est perméable à l'écoulement et au niveau de laquelle l'élément filtrant (10) peut être agencé.

12. Véhicule automobile (200), en particulier véhicule routier, en particulier voiture de tourisme, bus, camion, ou véhicule ferroviaire, en particulier autorail, locomotive, comprenant, dans une région avant (202), au moins une ouverture d'entrée d'air (204) derrière laquelle est agencé un dispositif de filtration d'air ambiant (100) selon l'une des revendications 9 à 11 qui est conçu en particulier pour éliminer les particules, en particulier la matière particulaire, et/ou les gaz de l'air ambiant.

13. Véhicule automobile selon la revendication 12, dans lequel la direction d'insertion ou la direction de retrait (50) est orientée dans une direction verticale prévue (206) du véhicule ou selon un angle aigu par rapport à la direction verticale prévue (206) du véhicule.

14. Véhicule automobile selon la revendication 12 ou 13, dans lequel le cadre d'installation (30) du dispositif de filtration d'air ambiant (100) est conçu comme faisant partie d'un capot, d'un boîtier, d'une structure de guidage d'air et/ou d'une structure d'absorption d'énergie présents dans une région avant (202) du véhicule automobile.
